# DEMANDE DE BREVET EUROPEEN

(11) **EP 1 361 685 A1**
(43) Date de publication de la demande: **12.11.2003**
(21) Numéro de dépôt: 03290818.8
(22) Date de dépôt: 01.04.2003
(51) Int. Cl.: H04B 10/18, G02B 6/16

(54) **Fibre de compensation de la dispersion chromatique cumulée dans une fibre à dispersion chromatique négative**

(30) Priorité: 29.04.2002 FR 0205377
(71) Demandeur: ALCATEL, 75008 Paris (FR)
(72) Inventeur: Ruilier, Cyril, 92260 Fontenay aux Roses (FR); Bigo, Sébastien, 91300 Massy (FR); Chesnoy, José, 75014 Paris (FR); Sansonetti, Pierre, 91120 Palaiseau (FR)
(74) Mandataire: Sciaux, Edmond

(57) **Abrégé**

La fibre est adaptée à la compensation de la dispersion chromatique et de la pente de dispersion chromatique d'une fibre optique à dispersion chromatique négative. Elle présente, dans un mode de propagation autre que le mode fondamental une dispersion chromatique positive et une pente de dispersion chromatique négative.

La fibre peut être utilisée dans des modules de dispersion de compensation ou comme fibre de ligne, dans des systèmes de transmission utilisant de la fibre de ligne à dispersion chromatique négative.

## Description

La présente invention concerne le domaine des transmissions par fibre optique, et plus spécifiquement, la compensation de la dispersion chromatique et de la pente de dispersion chromatique dans des systèmes de transmission par fibre optique.

Pour des fibres optiques, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction et l'indice de réfraction de la gaine de la fibre. On parle ainsi de profil d'indice en "échelon", en "trapèze" ou en "triangle" pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent.

Dans les nouveaux réseaux de transmission à hauts débits et multiplexés en longueur d'onde, il est avantageux de gérer la dispersion chromatique, notamment pour des débits supérieurs ou égaux à 40Gbit/s ou à 160Gbit/s ;l'objectif est d'obtenir, pour toutes les valeurs de longueur d'onde du multiplex, une dispersion chromatique cumulée sensiblement nulle sur la liaison, de sorte à limiter l'élargissement des impulsions; on appelle "dispersion chromatique cumulée" l'intégrale de la dispersion chromatique sur la longueur de la fibre; à dispersion chromatique constante, la dispersion chromatique cumulée est égale au produit de la dispersion chromatique par la longueur de la fibre. Une valeur cumulée de quelques dizaines de ps/nm pour la dispersion est en général acceptable. Il est aussi intéressant d'éviter au voisinage des longueurs d'onde utilisées dans le système les valeurs nulles de la dispersion chromatique locale, pour lesquelles les effets non-linéaires sont plus importants. Enfin, il est aussi intéressant de limiter la pente de dispersion chromatique cumulée sur la plage du multiplex de sorte à éviter ou limiter les distorsions entre les canaux du multiplex. Cette pente est classiquement la dérivée de la dispersion chromatique par rapport à la longueur d'onde.

On utilise classiquement comme fibre de ligne pour les systèmes de transmission à fibres optiques des fibres à saut d'indice, appelées aussi fibres SMF (acronyme de l'anglais "Single Mode Fiber"), des fibres à dispersion décalée, appelées aussi fibres NZ-DSF+ (acronyme de l'anglais "Non-Zero Dispersion shifted Fiber"). On qualifie de NZ-DSF+ des fibres à dispersion décalée, présentant une dispersion chromatique non-nulle et positive pour les longueurs d'onde auxquelles elles sont utilisées, typiquement autour de 1550 nm. Ces fibres présentent pour ces longueurs d'onde une dispersion chromatique faible, typiquement inférieure à 11 ps/(nm.km) à 1550 nm, et une pente de dispersion chromatique entre 0,04 et 0,1ps/(nm².km).

Pour compenser la dispersion chromatique et la pente de dispersion chromatique dans des fibres SMF ou NZ-DSF+ utilisées comme fibres de ligne, il est connu d'utiliser des faibles longueurs de fibre de compensation de dispersion ou DCF (Dispersion Compensating Fiber en langue anglaise). Des fibres DCF sont décrites par exemple dans US-A-5 568 583 ou US-A-5 361 319, pour la compensation de la dispersion chromatique cumulée dans une fibre SMF. EP-A-1 067 412 ou la demande de brevet français déposée sous le numéro 01 06246246 décrivent des fibres de compensation de dispersion adaptées à compenser la dispersion chromatique et la pente de dispersion chromatique d'une fibre DSF à dispersion chromatique positif dans la bande de transmission. Ces fibres de compensation de dispersion connues présentent au voisinage d'une longueur d'onde de 1550 nm une dispersion chromatique négative et une pente de la dispersion chromatique négative.

Il a aussi été proposé d'utiliser pour la compensation de la dispersion chromatique cumulée dans un système de transmission une fibre de compensation de dispersion qui n'est pas monomode. Ainsi, EP-A-0 886 574 propose une fibre de compensation de dispersion ayant un profil en rectangle avec anneau. Cette fibre est telle qu'elle supporte une propagation non seulement dans le mode LP01, mais aussi dans le mode d'ordre supérieur LP02. La dispersion chromatique présente de très fortes valeurs, typiquement inférieures à -200 ps/(nm.km) pour le mode LP02, sur une plage de longueurs d'onde relativement large. La fibre est montée dans le système de transmission entre deux réseaux à longue période, qui convertissent le mode LP01 en mode LP02. WO-A-00 51268 décrit une fibre de compensation de dispersion, utilisée dans le mode LP02 dans un système de transmission ayant de la fibre SMF comme fibre de ligne. Un convertisseur de mode est prévu entre la fibre SMF et la fibre de compensation de dispersion. Comme dans EP-A-0 886 574, la fibre de compensation de dispersion présente une dispersion chromatique négative dans la plage de longueurs d'onde utilisée dans le système de transmission.

Il a par ailleurs été proposé d'utiliser dans des systèmes de transmission de la fibre de ligne présentant une dispersion chromatique négative dans la plage de longueur d'onde utilisée. Cette fibre est à ce jour utilisée pour les liaisons transocéaniques, dont elle équipe la plupart des systèmes WDM installés à ce jour. Un exemple d'expérience décrite dans la littérature sur ce modèle est l'expérience [1] de N. S. Bergano et al., « 320 Gb/s WDM transmission (64x5Gb/s) over 7,200km using large mode fiber spans and chirped return to zero format », paper PD12 in proc. Optical Fiber Communication Conference (OFC'98), San Jose, Feb 26, 1998.

Un deuxième exemple [2] est décrit par G. Vareille et al., « 34x10Gb/s, 50GHz spacing DWDM) straight line transmission over 6380km with full system implementation assessment », paper PD 18, in proc. Optical Fiber Communication Conference (OFC'99), San Diego, Feb 25, 1999. Dans ce deuxième cas, les paramètres de la fibre de transmission sont fournis, avec une dispersion chromatique de -2.34ps/nm/km.

Toutefois, un type de fibre à dispersion négative existe aussi dans les réseaux terrestres, fourni par Corning sous la marque déposée « Corning LS », qui a une dispersion chromatique de l'ordre de -2.5ps/nm/km. Cette fibre est utilisée dans l'expérience [3] de D. Garthe et al., « Demonstration of 80Gb/s WDM transmission over 537km of non-zero dispersion shifted fiber without in-line management of gain tilt equalization », in.Proc. European Conf. On Optical Communications (ECOC'96), paper TuD 1.5, pp. 151-154, Oslo, Norway, 15-19 Sep., 1996.

Pour la compensation de la dispersion chromatique négative cumulée dans de telles fibres, il a été proposé d'utiliser des fibres à saut d'indice classique, du genre normalisé dans la recommandation G.652. Une telle fibre est par exemple explicitement employée dans l'expérience [2] mentionnée ci-dessus. Dans l'expérience [1], c'est une légère variante de cette fibre qui est utilisée comme fibre de compensation, à savoir une fibre à coeur de silice pure (PSCF), dont la dispersion chromatique est proche de 20 ps/nm/km.

Un problème rencontré dans ce cas est que la fibre à saut d'indice présente dans la bande de longueur d'onde utilisée une pente de dispersion chromatique positive, tout comme la fibre de ligne. Ceci impose, dans les systèmes de grande longueur, d'individualiser, pour chaque canal ou pour chaque groupe de quelques canaux, la fibre de compensation aux extrémités du système. Cette fibre de compensation est souvent de la fibre standard, comme la fibre de compensation en ligne, mais peut aussi être de la fibre DCF, à dispersion négative. Cette solution est complexe et augmente le coût des terminaux d'émission et de réception. Toutefois, c'est la solution la plus employée actuellement, comme décrit dans l'exemple de l'expérience [2], où huit types de fibres différents sont utilisés dans le transmetteur pour trente-quatre canaux WDM effectivement employés (une fibre de compensation sert donc à compenser une moyenne de 4 à 5 canaux).

Il existe donc un besoin d'une solution permettant de compenser la dispersion chromatique et/ou la pente de dispersion chromatique cumulées dans une fibre de ligne à dispersion chromatique négative.

L'invention propose donc, dans un mode de réalisation, une fibre optique, présentant pour une valeur de longueur d'onde prédéterminée et dans un mode de propagation autre que le mode fondamental :
- une dispersion chromatique positive;
- une pente de dispersion chromatique négative.

Avantageusement, le mode de propagation est un mode à symétrie circulaire; la longueur d'onde prédéterminée peut être de 1550 nm. La fibre peut aussi présenter une ou plusieurs des caractéristiques suivantes
- une surface effective supérieure ou égale à 50 µm² dans le mode de propagation;
- une dispersion chromatique supérieure ou égale à 4 ps/(nm.km), de préférence supérieure ou égale à 10ps/(nm.km) pour la longueur d'onde prédéterminée;
- un rapport de la dispersion chromatique à la pente de dispersion chromatique entre -90 et -20 nm pour la longueur d'onde prédéterminée;
- un rapport de la dispersion chromatique à la pente de dispersion chromatique supérieur ou égal à -1 nm pour la longueur d'onde prédéterminée:

- une pente de dispersion chromatique inférieure ou égale à -0,1 ps/(nm².km), de préférence inférieure ou égale à -0,5 ps/(nm².km) pour la longueur d'onde prédéterminée;
- un profil d'indice en rectangle avec une tranchée enterrée et un anneau.

L'invention propose aussi un système de transmission, présentant :
- un émetteur de signaux optiques dans une plage de longueurs d'onde prédéterminée,
- une section d'une première fibre optique monomode dans la plage de longueur d'onde et présentant dans la plage de longueurs d'onde une dispersion chromatique négative et une pente de dispersion chromatique positive;
- un convertisseur de mode;
- une section d'une deuxième fibre optique dans laquelle les signaux convertis se propagent dans un mode d'ordre supérieur, la deuxième fibre optique présentant dans la plage de longueur d'onde une dispersion chromatique positive et une pente de dispersion chromatique négative.

Avantageusement, le mode d'ordre supérieur présente dans la deuxième fibre une symétrie circulaire. Cette deuxième fibre peut présenter dans le mode de propagation d'ordre supérieur et dans la plage de longueur d'onde une surface effective supérieure ou égale à 50 µm². Il est aussi avantageux que la plage de longueur d'onde contient la longueur d'onde de 1550 nm.

Dans un mode de réalisation, la deuxième fibre présente dans la plage de longueur d'onde une dispersion chromatique supérieure ou égale à 4 ps/(nm.km), de préférence supérieure ou égale à 10ps/(nm.km). Dans ce cas, la deuxième fibre peut présenter dans la plage de longueur d'onde un rapport de la dispersion chromatique à la pente de dispersion chromatique entre -90 et -20 nm.

Dans un autre mode de réalisation, le système comprend en outre une troisième fibre, présentant dans le mode fondamental et dans la plage de longueur d'onde:
- une dispersion chromatique positive;
- une pente de dispersion chromatique positive.

Dans ce cas, il est avantageux que la deuxième fibre présente un rapport de la dispersion chromatique à la pente de dispersion chromatique supérieur ou égal à -1 nm. Cette deuxième fibre peut alors présenter une pente de dispersion chromatique inférieure ou égale à -0,1 ps/(nm².km), de préférence inférieure ou égale à -0,5 ps/(nm².km). On peut utiliser une fibre NZ-DSF- pour la première fibre.

De préférence, la dispersion chromatique cumulée dans la plage de longueur d'onde reste inférieure en valeur absolue à 50 ps/nm et de préférence à 25 ps/nm.

D'autres caractéristiques et avantages de l'invention apparaîtront à la lecture de la description qui suit de modes de réalisation de l'invention, donnés à titre d'exemple et en référence aux dessins annexés, qui montrent
- figure 1, une représentation schématique d'un système de transmission selon un mode de réalisation de l'invention;
- figure 2, une représentation schématique d'un système de transmission selon un autre mode de réalisation de l'invention;
- figure 3, une représentation schématique d'un répéteur d'un système de transmission selon encore un autre mode de réalisation de l'invention;
- figure 4, une représentation graphique du profil consigne d'une fibre de compensation de dispersion selon l'invention et de l'amplitude du mode LP02 dans la fibre;
- figure 5, une représentation graphique du profil de consigne de deux fibres selon l'invention.

Pour compenser la dispersion chromatique négative et la pente de dispersion chromatique positive cumulées dans une fibre optique, l'invention propose d'utiliser une fibre optique dans un mode autre que le mode fondamental, présentant dans cette autre mode une dispersion chromatique positive et une pente de dispersion chromatique négative, pour les longueurs d'onde utilisées dans le système de transmission.

Le fait que la fibre de compensation de dispersion présente une pente de dispersion chromatique négative permet de compenser non seulement la dispersion chromatique cumulée dans la fibre optique à dispersion chromatique négative, mais aussi la pente de dispersion chromatique cumulée dans cette fibre.

Le fait que la fibre de compensation de dispersion est utilisée dans un mode de transmission autre que le mode fondamental lui permet d'avoir aux longueurs d'onde considérées une dispersion chromatique positive et une pente de dispersion chromatique négative.

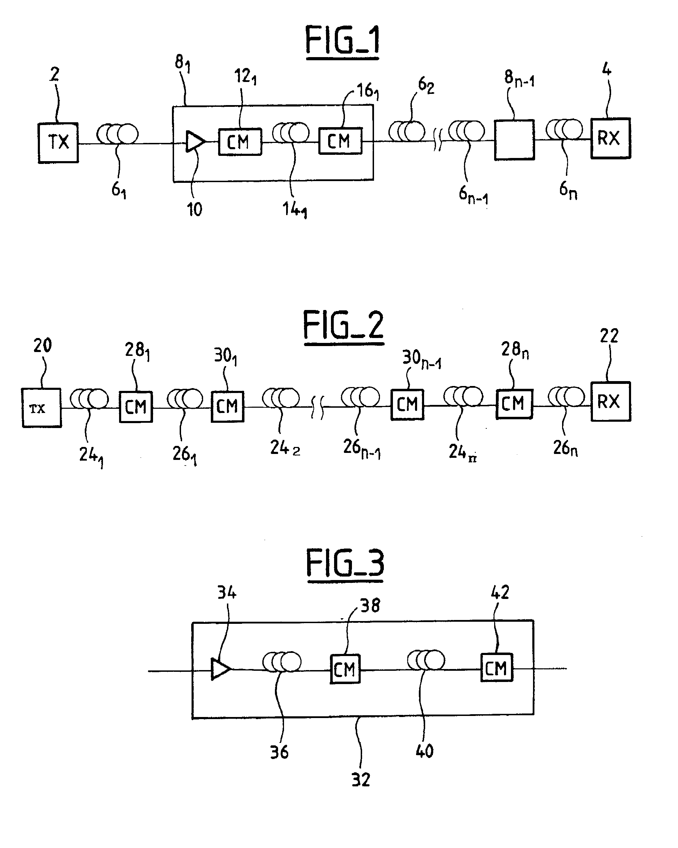

La figure 1 est une représentation schématique d'un système de transmission selon un premier mode de réalisation de l'invention; dans ce mode de réalisation, la compensation de la dispersion chromatique et de la pente de dispersion chromatique a lieu dans des modules de compensation.

On a représenté à la figure 1 l'émetteur TX 2 et le récepteur RX 4 du système de transmission, entre lesquels s'étend la fibre de ligne - c'est-à-dire la fibre qui s'étend le long du système de transmission. La fibre de ligne est formée de tronçons 6₁ à 6ₙ, séparés par des répéteurs 8₁ à 8ₙ₋₁. La fibre de ligne présente, pour les longueurs d'onde utilisées dans le système de transmission, une dispersion chromatique négative et une pente de dispersion chromatique positive. Chaque répéteur 8ᵢ présente un amplificateur 10ᵢ, dont la structure est sans incidence sur le fonctionnement de l'invention, et n'est donc pas décrite. En sortie de l'amplificateur est prévu un convertisseur de mode 12ᵢ, suivi d'une section 14ᵢ d'une fibre de compensation de dispersion selon l'invention. En sortie de la section 14ᵢ est prévu un autre convertisseur de mode 16ᵢ; la sortie du convertisseur de mode constitue la sortie du répéteur 8ᵢ et est reliée au tronçon suivant 6ᵢ₊₁ de fibre de ligne.

La lumière provenant de la fibre de ligne est donc amplifiée, puis traverse le convertisseur de mode 12ᵢ; celui-ci a pour fonction de convertir la lumière incidente, qui se propage dans la fibre d'amplification et dans la fibre de ligne dans le mode fondamental LP01 pour la faire passer dans le mode LP02 ou dans un mode d'ordre supérieur. On peut utiliser comme convertisseur de mode tous les dispositifs connus en tant que tel pour cette fonction, tels que des réseaux à longue période. La lumière est donc transmise à travers la fibre de compensation 14ᵢ de dispersion dans le mode LP02 et/ou dans des modes d'ordre supérieur. La propagation à travers la fibre de compensation de dispersion permet de compenser la dispersion chromatique et la pente de dispersion chromatique cumulées dans la fibre de ligne, comme expliqué plus bas. En sortie de la fibre de compensation de dispersion 14ᵢ, le convertisseur de mode 16ᵢ fait passer la lumière dans le mode fondamental, pour une propagation ultérieure dans la fibre de ligne.

Des modifications au système de transmission de la figure 1 sont possibles: ainsi, peuvent être prévus des filtres, un amplificateur en aval de la fibre de compensation de dispersion; on pourrait aussi utiliser la fibre de compensation de dispersion simultanément comme fibre d'amplification en la dopant avec une terre rare. Dans l'exemple de la figure 1, les dispositifs 8ᵢ sont qualifiés de "répéteurs", en ce qu'ils comprennent un amplificateur; on pourrait aussi séparer les amplificateurs et les sections de fibre de compensation de dispersion, un boîtier comprenant une fibre de compensation de dispersion (avec ou sans amplificateur) pouvant alors être appelé "module de compensation".

La figure 2 est une représentation schématique d'un système de transmission selon un deuxième mode de réalisation de l'invention; dans ce mode de réalisation, la fibre de l'invention est utilisée comme fibre de ligne; autrement dit, la compensation de la dispersion chromatique et de la pente de dispersion chromatique a lieu non pas dans des modules de compensation, mais au cours de la transmission, le long du système de transmission. Dans ce mode de réalisation, il peut en outre être utile d'assurer que le couplage parasite entre modes (mélange par interférences, résultant de la conversion imparfaite des modes) reste faible. La figure 2 montre l'émetteur TX 20 et le récepteur RX 22 du système de transmission, entre lesquels s'étend la fibre de ligne. La fibre de ligne comprend des tronçons 24₁ à 24ₙ d'une fibre d'un premier type, présentant pour les longueurs d'onde utilisées dans le système de transmission, une dispersion chromatique négative et une pente de dispersion chromatique positive. La fibre de ligne comprend aussi des tronçons 26₁ à 26ₙ d'une fibre d'un deuxième type. Cette fibre présente une dispersion chromatique positive et une pente de dispersion chromatique négative pour les longueurs d'onde utilisées dans le système de transmission et dans un ou plusieurs modes autres que le mode fondamental.

Entre un tronçon de fibre 24ᵢ du premier type et un tronçon de fibre 26ᵢ du deuxième type, on prévoit au moins un convertisseur de mode 28ᵢ. Comme le convertisseur de mode 12ᵢ de la figure 1, le convertisseur de mode a pour fonction de convertir la lumière se propageant dans le mode fondamental à travers la fibre 24ᵢ pour qu'elle se propage dans la fibre 26ᵢ dans le mode LP02 ou dans un autre mode d'ordre supérieur.

Entre un tronçon de fibre 26ᵢ du deuxième type et un tronçon de fibre 24ᵢ₊₁ du premier type, on prévoit au moins un convertisseur de mode 30ᵢ. Comme le convertisseur de mode 16ᵢ de la figure 1, le convertisseur de mode 30ᵢ a pour fonction de convertir la lumière se propageant dans le mode LP02 ou dans un autre mode d'ordre supérieur à travers la fibre 26ᵢ, pour la ramener dans le mode fondamental pour une transmission ultérieure à travers la fibre 24ᵢ₊₁.

On n'a pas décrit à la figure les autres éléments, tels amplificateurs, filtres ou autres qui peuvent être utiles dans le système de transmission.

La lumière transmise par l'émetteur se propage à travers la fibre 24ᵢ du premier type dans le mode fondamental; elle y accumule une dispersion chromatique négative, avec un décalage entre les divers canaux du fait de la pente de dispersion chromatique positive. En sortie d'un tronçon 24ᵢ de fibre du premier type, la lumière traverse le convertisseur de mode 28ᵢ; celui-ci convertit la lumière incidente pour la faire passer dans le mode LP02 ou dans un mode d'ordre supérieur. Dans la fibre 26ᵢ, la dispersion chromatique est positive, de sorte que la dispersion chromatique cumulée croît, compensant ainsi la dispersion chromatique cumulée dans la fibre du premier type. L'écart entre les canaux provoqué par la pente de dispersion chromatique positive dans la fibre du premier type diminue, du fait de la pente de dispersion chromatique dans la fibre du deuxième type.

Dans le mode de réalisation de la figure 2, il est abusif de qualifier la fibre du deuxième type de fibre de compensation de dispersion - dans la mesure où la fibre du deuxième type est aussi utilisée comme fibre de ligne. La fibre du premier type compense aussi la dispersion cumulée dans la fibre du deuxième type. Le qualificatif habituel pour la fibre du deuxième type est fibre de dispersion inverse ou "RDF" (acronyme de l'anglais "Reverse Dispersion Fiber"), ceci indiquant que les fibres du premier et du deuxième type ont des dispersions chromatiques de signes opposés. On utilise néanmoins la qualification de fibre de compensation de dispersion pour décrire la fibre du deuxième type.

Dans le mode de réalisation de la figure 1, la fibre de compensation de dispersion ne contribue pas à la longueur du système de transmission; autrement dit, le rapport entre la longueur de la fibre optique en dehors des répéteurs et la longueur totale du système de transmission est voisin de 1. La fibre de compensation de dispersion n'est donc pas utilisée comme fibre de ligne. Dans le mode de réalisation de la figure 2, au contraire, la fibre de compensation de dispersion contribue à la longueur du système de transmission : le rapport entre la longueur de la fibre de compensation de dispersion et la longueur totale du système de transmission est de l'ordre de 1/3 (cas de l'exemple donné avec compensation sur LP02, dispersion de +15 ps/nm/km et C/C' de -90 nm) voire de l'ordre de 1/10 (cas de l'exemple donné avec compensation sur LP03, dispersion de +20 ps/nm/km et C/C' de -20 nm). La fibre de compensation de dispersion est utilisée comme fibre de ligne.

La figure 3 montre une représentation schématique d'un répéteur d'un système de transmission selon encore un autre mode de réalisation de l'invention. Le répéteur de la figure 3 est utilisable dans un système de transmission du genre de celui de la figure 1. Le répéteur de la figure 3 comprend, à la différence de celui de la figure 1, deux sections de fibre de compensation. Le répéteur 32 présente donc un amplificateur 34, suivi d'une première section 36 de fibre de compensation de dispersion. Cette première section de fibre de compensation de dispersion peut être formée d'une fibre de compensation de dispersion de l'état de la technique, apte à compenser la dispersion chromatique dans la fibre de ligne - sans toutefois compenser la pente de dispersion chromatique. Cette fibre présente typiquement une dispersion chromatique et une pente de dispersion chromatique positives (pour une fibre de ligne à dispersion chromatique négative); elle est monomode dans la plage de longueurs d'onde considérée. Est ensuite prévu un convertisseur de mode 38, suivi d'une deuxième section de fibre de compensation de dispersion 40. La fibre de cette deuxième section présente une dispersion chromatique positive et une pente de dispersion chromatique négative pour les longueurs d'onde utilisées dans le système de transmission et dans un ou plusieurs modes autres que le mode fondamental. En sortie de cette deuxième section est prévu un autre convertisseur de mode 42.

Comme le convertisseur de mode 12ᵢ de la figure 1, le convertisseur de mode 38 a pour fonction de convertir la lumière se propageant dans le mode fondamental à travers la fibre 36 pour qu'elle se propage dans la fibre 40 dans le mode LP02 ou dans un autre mode d'ordre supérieur choisi.

Comme le convertisseur de mode 16ᵢ de la figure 1, le convertisseur de mode 42 a pour fonction de convertir la lumière se propageant dans le mode LP02 ou dans un autre mode d'ordre supérieur à travers la fibre 40 pour la ramener dans le mode fondamental pour une transmission ultérieure à travers la fibre de ligne, en sortie du répéteur.

La lumière provenant de la fibre de ligne est donc amplifiée, puis traverse la première section de fibres de compensation de dispersion : la propagation à travers la fibre de compensation de dispersion permet de compenser la dispersion chromatique et de compenser partiellement la pente de dispersion chromatique cumulées dans la fibre de ligne. Le convertisseur de mode 38 convertit ensuite la lumière, de sorte à ce qu'elle se propage dans la deuxième section de fibre de ligne dans le mode LP02 ou dans un mode d'ordre supérieur. Dans la deuxième section de fibre de compensation de dispersion, la pente résiduelle de dispersion chromatique est compensée. En sortie de cette deuxième section, le convertisseur de mode 42 fait passer la lumière dans le mode fondamental, pour une propagation ultérieure dans la fibre de ligne.

Comme plus haut, on pourrait prévoir d'autres amplificateurs ou des filtres; on pourrait inverser l'ordre des fibres.

Dans le mode de réalisation de la figure 1 ou 2 comme dans celui de la figure 3, les caractéristiques de la fibre dépendent de la fibre compensée en dispersion ou en pente de dispersion. Dans le mode de réalisation de la figure 1 ou 2, il est avantageux que la fibre présente une ou plusieurs des caractéristiques suivantes, pour une longueur d'onde dans la bande utilisée dans le système de transmission :
- un rapport de la dispersion chromatique à la pente de dispersion chromatique voisin de celui de la fibre de ligne; pour une fibre de ligne NZ-DSF-, on choisit de préférence un rapport entre -90 et -20 nm; ces valeurs correspondent à certaines des fibres actuelles, mais on peut aussi envisager des valeurs du rapport en dehors de cette plage;
- une dispersion chromatique aussi forte que possible; de fait, la longueur de la fibre de compensation de dispersion chromatique utilisée est d'autant plus faible que la dispersion chromatique de cette fibre est élevée. On peut choisir, dans le cas de la figure 2, une dispersion chromatique supérieure ou égale à deux fois la valeur absolue de la dispersion chromatique de la fibre de ligne. Cette valeur assure que la longueur de la fibre de compensation est au plus la moitié de la longueur de la fibre de ligne. Pour une fibre NZ-DSF-, on trouve des valeurs de dispersion chromatique supérieure ou égale à 4 ps/(nm.km), voire supérieure ou égale à 10 ps/(nm.km). Des valeurs de dispersion chromatique supérieures ou égales à 10 ps/(nm.km), voire à 20 ps/(nm.km) sont appropriées pour un système du genre de celui de la figure 2;
- une pente de dispersion chromatique négative;
- une surface effective supérieure à 50 µm² dans le ou les modes de propagation utilisés.

La plage proposée du rapport de la dispersion chromatique à la pente de dispersion chromatique permet une bonne compensation des fibres à dispersion chromatique négative de l'état de la technique. La valeur proposée de la surface effective limite les pertes non-linéaires dans la fibre.

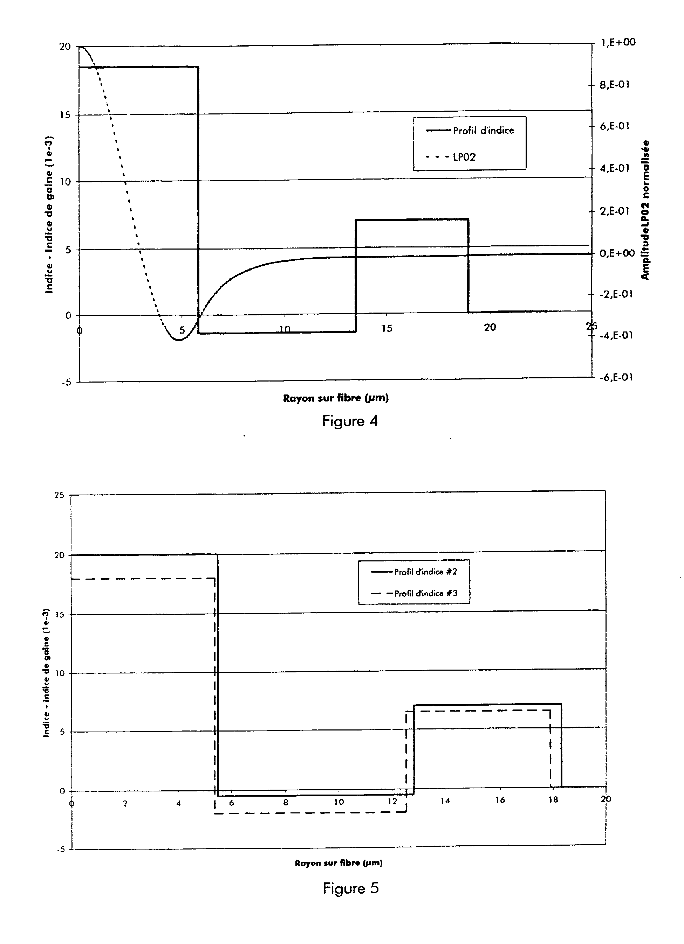

Dans le mode de réalisation de la figure 3, la première section de fibre de compensation 36 compense quasiment complètement la dispersion chromatique cumulée dans la fibre de ligne. En entrée de la deuxième section de fibre de compensation de dispersion, la dispersion chromatique cumulée est faible. La fonction de la deuxième section de fibre de compensation de dispersion est donc de compenser la pente de dispersion chromatique résiduelle. Il est alors avantageux de choisir une fibre qui présente
- un rapport de la dispersion chromatique à la pente de dispersion chromatique négatif et faible; des valeurs de ce rapport supérieures ou égales à -1 nm sont adaptées;
- une pente dispersion chromatique négative et aussi faible que possible; de fait, la longueur de la deuxième section de fibre de compensation de dispersion chromatique utilisée est d'autant plus faible que la pente de dispersion chromatique de cette fibre est élevée (en valeur absolue). On peut choisir une pente de dispersion chromatique inférieure ou égale à -0,1 ps/(nm².km), voire encore mieux inférieure ou égale à -0,5 ps/(nm².km). Cette seconde valeur est avantageuse non seulement en ce qu'elle est plus importante en valeur absolue, mais aussi du fait qu'elle permet, avec les profils des figures 4 et 5, d'obtenir des valeurs variées des rapports de la dispersion chromatique à la pente de dispersion chromatique;
- une surface effective supérieure à 50 µm² dans le ou les modes de propagation utilisés.

Dans les exemples des figures 1, 2 ou 3, il est avantageux que le mode de propagation dans la fibre selon l'invention présente la même symétrie que le mode de propagation dans la fibre de ligne (ou que dans la première fibre de compensation de dispersion). Si ces modes présentent une symétrie circulaire - comme la plupart des modes fondamentaux des fibres de l'état de la technique - on peut choisir pour la fibre de l'invention un mode de propagation d'ordre supérieur présentant aussi une symétrie circulaire. Les exemples de propagation en modes LP02 et LP03 ne sont pas limitatifs et on pourrait par exemple utiliser le mode LP05 ou d'autres modes d'ordre supérieur à symétrie circulaire.

La figure 4 est une représentation graphique du profil consigne d'une fibre de compensation de dispersion selon l'invention et de l'amplitude du mode LP02 dans la fibre. Dans l'exemple, cette fibre est destinée à être utilisée dans une plage de longueur d'onde de 1530 à 1565 nm, c'est-à-dire en bande C.

Sur la figure 4, on a porté en abscisse la distance au centre de la fibre, en micromètres; figure en ordonnée sur l'axe de gauche de la figure la différence d'indice avec la gaine de la fibre. Figure en ordonnée sur l'axe de droite de la figure l'amplitude de la lumière, normalisée à l'amplitude maximale. La figure montre le profil de consigne de la fibre, qui est un profil d'indice en rectangle avec anneau. La fibre présente donc, comme représenté à la figure,
- une partie centrale de rayon r₁ avec un indice sensiblement constant, présentant avec l'indice de la gaine une différence Δn₁ positive;
- une partie annulaire s'étendant entre les rayons r₁ et r₂, présentant avec l'indice de la gaine une différence Δn₂ négative;
l'ensemble constituant un profil d'indice dit "en rectangle avec une tranchée enterrée ou déprimée". Autour de la tranchée enterrée, la fibre présente entre les rayons r₂ et r₃ un anneau, c'est-à-dire une partie d'indice supérieur à l'indice de la gaine, d'où le qualificatif de profil en rectangle avec une tranchée enterrée et un anneau. On note Δn₃ la différence entre l'indice de l'anneau et l'indice de la gaine. Les valeurs des différents paramètres sont rappelées dans le tableau qui suit.

**Tableau I.**

| r₁ (µm) | r₂ (µm) | r₃ (µm) | 10³Δn₁ | 10³Δn₂ | 10³Δn₃ |
|---|---|---|---|---|---|
| 5.8 | 13.5 | 19 | 18.5 | -1.4 | 7 |

Avec ce profil de consigne, la fibre présente les caractéristiques suivantes à une longueur d'onde de 1550 nm :
- une dispersion chromatique de 15 ps/(nm.km);
- un rapport de la dispersion chromatique à la pente de dispersion chromatique de -90 nm;
- une surface effective de 65 µm² dans le mode LP02.

La fibre présente une longueur d'onde de coupure de 2 µm pour le mode LP02, ce qui est bien de nature à permettre en bande C une propagation dans le mode LP02. Le choix de mode de propagation est avantageux, dans la mesure où il s'agit du premier mode d'ordre supérieur qui présente les mêmes symétries que le mode fondamental; on peut aussi utiliser d'autres modes, comme dans les exemples proposés plus bas.

Les valeurs négatives de la dispersion chromatique et de la pente de dispersion chromatique permettent de compenser la dispersion chromatique négative et la pente de dispersion chromatique positive d'une fibre NZ-DSF-; plus la valeur de la dispersion chromatique est positive, plus la longueur de fibre de compensation nécessaire pour compenser la dispersion chromatique cumulée dans la fibre de ligne diminue; une valeur importante de la dispersion chromatique est particulièrement utile dans le mode de réalisation de la figure 1.

La valeur de l'aire effective limite les pertes ou les effets non-linéaires susceptibles d'apparaître à forte puissance du signal se propageant dans la fibre de compensation.

On donne maintenant un exemple d'un système de transmission utilisant la fibre de la figure 4 pour compenser la dispersion chromatique et la pente de dispersion chromatique d'une fibre NZ-DSF- de l'état de la technique, dans la configuration de la figure 1. La fibre NZ-DSF- présente pour une longueur d'onde de 1550 nm:
- une dispersion chromatique de l'ordre de -4 ps/nm/km;
- un rapport de la dispersion chromatique à la pente de dispersion chromatique de -90 nm;

La fibre NZ-DSF- et la fibre de compensation de dispersion chromatique présentent donc des valeurs quasiment identiques du rapport de la dispersion chromatique à la pente de dispersion chromatique. Ceci assure qu'une compensation de la dispersion chromatique conduira en même temps à une compensation de la pente de dispersion chromatique. Un système de transmission peut donc présenter
- des tronçons de fibre NZ-DSF- d'une longueur de 50 km (longueur typique d'un segment sous-marin),
- compensés en dispersion chromatique par des tronçons ou des modules de compensation avec une longueur de 13.5 km de fibre de la figure 4.

La dispersion chromatique et la pente de dispersion chromatique cumulées dans un tronçon de fibre de ligne et dans une section de fibre de compensation de dispersion présentent les valeurs fournies dans le tableau II, pour différentes valeurs de longueur d'onde dans la bande C. Compte tenu des valeurs proposées dans le système, la dispersion chromatique cumulée reste inférieure en bande C à -17 ps/nm pour le schéma proposé : la longueur de fibre compensatrice est adaptée de manière à minimiser la dispersion chromatique à 1550 nm. Il est aussi possible d'adapter la longueur de fibre compensatrice de manière à réduire l'écart crête à crête de dispersion cumulée sur la bande spectrale. Pour la bande C et le profil proposé, une longueur de 14 km de fibre pour 50 km de transmission permet d'homogénéiser la dispersion résiduelle sur toute la bande (voir tableau II).

**Tableau II**

| | 1530 nm | 1550 nm | 1565 nm |
|---|---|---|---|
| C cumulée (ps/nm) Longueur 13.5 km | -17.12 | -0.47 | -11.15 |
| C cumulée (ps/nm) Longueur 14 km | -8.61 | 6.92 | -5.46 |

La figure 5 montre une représentation graphique du profil de consigne de deux fibres selon l'invention; les conventions de représentation sont les mêmes qu'à la figure 4. Les fibres sont de nouveau des fibres à profil de consigne en rectangle avec une tranchée enterrée et un anneau. Les valeurs des différents paramètres sont rappelées dans le tableau qui suit.

**Tableau III**

| Fibre | r₁ (µm) | r₂ (µm) | r₃ (µm) | 10³Δn₁ | 10³Δn₂ | 10³Δn₃ |
|---|---|---|---|---|---|---|
| Fibre 2 | 5.49 | 12.81 | 18.3 | 20 | -0.5 | 7 |
| Fibre 3 | 5.37 | 12.53 | 17.9 | 18 | -2 | 6.5 |

La fibre 2 est conçue pour être utilisé dans la bande C, avec une propagation dans le mode LP02. Elle présente à une longueur d'onde de 1550 nm une dispersion chromatique de l'ordre de 5 ps/(nm.km), pour un rapport de la dispersion chromatique à la pente de dispersion chromatique de l'ordre de - 20 nm. Elle présente une surface effective de 62 µm². Cette fibre est bien adaptée à la compensation de la dispersion chromatique et de la pente de dispersion chromatique d'une fibre de l'état de la technique mentionnée dans la référence [1].

On peut aussi utiliser ce type de fibre de compensation avec faible valeur de dispersion pour la compensation de la pente seule. La longueur d'onde correspondant au passage par le zéro de la dispersion est déterminée par la définition du profil d'indice.

La fibre 3 est conçue pour être utilisé dans la bande C, avec une propagation dans le mode LP03. Elle présente à une longueur d'onde de 1550 nm une dispersion chromatique de l'ordre de 20 ps/(nm.km), pour un rapport de la dispersion chromatique à la pente de dispersion chromatique de l'ordre de - 20 nm. Elle présente une surface effective de 62 µm², pour une propagation dans le mode LP03. Cette fibre est adaptée à la compensation de la dispersion chromatique des mêmes fibres de l'état de la technique; toutefois, comme elle présente une dispersion chromatique plus importante, la longueur d'onde nécessaire de fibre de compensation de dispersion est plus faible, *ceteris paribus*.

Sur le plan qualitatif, il apparaît qu'une faible pente de dispersion chromatique permet d'obtenir des valeurs plus importantes de la dispersion chromatique; de telles valeurs plus importantes permettent une compensation sur des distances plus courtes.

La fibre de l'invention peut être fabriquée par l'homme du métier à l'aide de techniques connues, comme le MCVD, l'OVD ou les autres techniques couramment utilisées pour la fabrication des fibres optiques.

Bien entendu, l'invention n'est pas limitée aux exemples proposés plus haut; les fibres de compensation de dispersion peuvent présenter des profils différents de ceux des figures 4 et 5; les fibres de lignes peuvent aussi être différentes de la fibre NZ-DSF- donnée en exemple. En effet, ces fibres présentent dans la bande C une dispersion chromatique négative et une pente de dispersion chromatique positive; l'invention pourrait aussi être appliquée à des fibres NZ-DSF+ utilisées dans les plages de longueur d'onde en-dessous de la longueur d'onde λ₀ d'annulation de la dispersion chromatique; dans de telles plages, la dispersion chromatique est négative et la pente de dispersion chromatique reste positive.

Dans les exemples proposés plus haut, il apparaît que la dispersion chromatique comme la pente de dispersion chromatique sont complètement compensées; on peut aussi accepter dans des systèmes de transmission une dispersion chromatique résiduelle ou une pente de dispersion chromatique résiduelle. La structure du système de transmission peut différer de celle représentée aux figures 1, 2 ou 3.

Les exemples sont donnés en bande C; on peut appliquer l'enseignement ci-dessus à d'autres bandes de longueur d'onde.

## Revendications

1. Une fibre optique, présentant pour une valeur de longueur d'onde prédéterminée et dans un mode de propagation autre que le mode fondamental :
- une dispersion chromatique positive;
- une pente de dispersion chromatique négative.

2. La fibre de la revendication 1, **caractérisée en ce que** le mode de propagation est un mode à symétrie circulaire.

3. La fibre de la revendication 1, **caractérisée en ce qu'**elle présente dans le mode de propagation une surface effective supérieure ou égale à 50 µm².

4. La fibre de la revendication 1, 2 ou 3, **caractérisée en ce que** la longueur d'onde prédéterminée vaut 1550 nm.

5. La fibre de l'une des revendications 1 à 4, **caractérisée en ce qu'**elle présente pour la longueur d'onde prédéterminée une dispersion chromatique supérieure ou égale à 4 ps/(nm.km), de préférence supérieure ou égale à 10ps/(nm.km).

6. La fibre de l'une des revendications 1 à 5, **caractérisée en ce qu'**elle présente pour la longueur d'onde prédéterminée un rapport de la dispersion chromatique à la pente de dispersion chromatique entre -90 et -20 nm.

7. La fibre de l'une des revendications 1 à 6, **caractérisée en ce qu'**elle présente pour la longueur d'onde prédéterminée un rapport de la dispersion chromatique à la pente de dispersion chromatique inférieur ou égal à -1 nm.

8. La fibre de la revendication 7, **caractérisée en ce qu'**elle présente pour la longueur d'onde prédéterminée une pente de dispersion chromatique inférieure ou égale à -0,1 ps/(nm².km), de préférence inférieure ou égale à -0,5 ps/(nm².km).

9. La fibre de l'une des revendications 1 à 8, **caractérisée en ce qu'**elle présente pour la longueur d'onde prédéterminée un profil d'indice en rectangle avec une tranchée enterrée et un anneau.

10. Un système de transmission, présentant :
- un émetteur de signaux optiques dans une plage de longueurs d'onde prédéterminée,
- une section d'une première fibre optique (6ᵢ, 24ᵢ) monomode dans la plage de longueur d'onde et présentant dans la plage de longueurs d'onde une dispersion chromatique négative et une pente de dispersion chromatique positive;
- un convertisseur de mode (12ᵢ, 28ᵢ);
- une section (14ᵢ, 26ᵢ) d'une deuxième fibre optique dans laquelle les signaux convertis se propagent dans un mode d'ordre supérieur, la deuxième fibre optique présentant dans la plage de longueur d'onde une dispersion chromatique positive et une pente de dispersion chromatique négative.

11. Le système de la revendication 10, **caractérisé en ce que** le mode d'ordre supérieur présente dans la deuxième fibre une symétrie circulaire.

12. Le système de la revendication 10 ou 11, **caractérisé en ce que** la deuxième fibre présente dans le mode de propagation d'ordre supérieur et dans la plage de longueur d'onde une surface effective supérieure ou égale à 50 µm².

13. Le système de la revendication 10, 11 ou 12, **caractérisé en ce que** la plage de longueur d'onde contient la longueur d'onde de 1550 nm.

14. Le système de l'une des revendications 10 à 13, **caractérisé en ce que** la deuxième fibre présente dans la plage de longueur d'onde une dispersion chromatique supérieure ou égale à 4 ps/(nm.km), de préférence supérieure ou égale à 10ps/(nm.km).

15. Le système de l'une des revendications 10 à 14, **caractérisé en ce que** la deuxième fibre présente dans la plage de longueur d'onde un rapport de la dispersion chromatique à la pente de dispersion chromatique entre -90 et - 20 nm..

16. Le système de l'une des revendications 10 à 13, **caractérisé en ce qu'**il comprend en outre une troisième fibre, présentant dans le mode fondamental et dans la plage de longueur d'onde:
- une dispersion chromatique positive;
- une pente de dispersion chromatique positive.

17. Le système de la revendication 16, **caractérisé en ce que** la deuxième fibre présente un rapport de la dispersion chromatique à la pente de dispersion chromatique supérieur ou égal à -1 nm.

18. Le système de la revendication 16 ou 17, **caractérisé en ce que** la deuxième fibre présente une pente de dispersion chromatique inférieure ou égale à - 0,1 ps/(nm².km), de préférence inférieure ou égale à -0,5 ps/(nm².km).

19. Le système de l'une des revendications 10 à 18, **caractérisé en ce que** la première fibre est une fibre NZ-DSF-.

20. Le système de l'une des revendications 10 à 19, **caractérisé en ce que** la dispersion chromatique cumulée dans la plage de longueur d'onde reste inférieure en valeur absolue à 50 ps/nm et de préférence à 25 ps/nm.
